**Europäisches Patentamt**

**European Patent Office**

**Office européen des brevets**

(19)

(11) Veröffentlichungsnummer: **0 090 967**
**B1**

(12) **EUROPÄISCHE PATENTSCHRIFT**

(45) Veröffentlichungstag der Patentschrift:
04.02.87

(21) Anmeldenummer: **83102569.7**

(22) Anmeldetag: **16.03.83**

(51) Int. Cl.⁴: **G 02 B 7/00,** G 02 B 23/16,
G 02 B 7/18

(54) **Chassis für optische Geräte.**

(30) Priorität: **31.03.82 DE 3211868**

(43) Veröffentlichungstag der Anmeldung:
**12.10.83 Patentblatt 83/41**

(45) Bekanntmachung des Hinweises auf die Patenterteilung:
**04.02.87 Patentblatt 87/6**

(84) Benannte Vertragsstaaten:
**CH DE FR GB IT LI NL**

(56) Entgegenhaltungen:
**DE-A-2 155 269**
**DE-A-2 155 270**

**Prospekt "Aluminiumoxid-Keramik Stemalox" der Rosenthal Technik AG Werksgruppe III, Seite 15.**

(73) Patentinhaber: **Firma Carl Zeiss, D-7920 Heidenheim (Brenz) (DE)**

(72) Erfinder: **Mächler, Meinrad, Sulzgasse 2, D-7090 Ellwangen (DE)**

LIBER, STOCKHOLM 1987

## Beschreibung

Die Erfindung betrifft ein optisches Gerät mit einem Chassis aus Keramik, an dem mehrere optische Bauteile in zueinander ausgerichteter Position befestigt sind.

In optischen Geräten müssen die optischen Bauteile eine genau definierte Lage zueinander haben. Diese Lage muß zeitlich und thermisch möglichst stabil sein, damit das Gerät auch über lange Zeiten und bei unterschiedlichen Umgebungstemperaturen die gewünschten Eigenschaften beibehält.

Aus diesem Grund sind viele Chassis von optischen Geräten aus Metall. Dabei wird teilweise durch die konstruktive Ausbildung und die Auswahl geeigneter Materialien der Temperatureinfluß vermindert, was jedoch immer mit entsprechendem Aufwand verbunden ist. Abgesehen davon können Metallchassis infolge ihrer durch die Herstellung bedingten inneren Spannungen nur mit großem Aufwand in einen Zustand gebracht werden, bei dem hohe Abmessungsstabilität über lange Zeiten erreicht wird.

In jüngerer Zeit sind, insbesondere bei Ferngläsern, auch Gehäuse aus glasfaserverstärktem Kunststoff bekannt geworden. Die Herstellung ist jedoch aufwendig und teuer. Außerdem sind die Abgabe von Gasen sowie Alterungserscheinungen für viele Anwendungsgebiete noch nicht ausreichend geklärt.

Aus der Herstellung von großen Spiegeln ist die Verwendung von Glaskeramik bekannt. Diese ist jedoch in ihrer Herstellung derart aufwendig und damit teuer, daß ihre Verwendung für die Serienfertigung nicht in Frage kommt.

Außerdem ist aus der DE-A-2 155 269 ein digitales Lichtablenksystem (Kerr-Zelle) bekannt, welches an den Wänden des Gehäuses befestigte optische und elektrooptische Bauteile enthält. Die Wände sind anstelle des bisher üblichen Quarzglases aus Keramik, womit insbesondere bessere Oberflächeneigenschaften und dadurch geringere Verunreinigungen der für die Kerr-Zelle notwendigen Flüssigkeit erreicht werden. Bei einer Kerr-Zelle kann man die mit (normaler) Keramik verbundene Zerbrechlichkeit in Kauf nehmen; bei zahlreichen anderen optischen Geräten ist dies jedoch nicht möglich.

In jüngster Zeit sind die Anforderungen an die zeitliche und thermische Stabilität von Gerätechassis durch das Aufkommen von Diodenarrays auch für die Serienfertigung sehr gestiegen. Bei diesen Diodenarrays hat das einzelne Empfängerelement nur Abmessungen von z.B. 25 µm. In diesem Fall muß die Justierung eines Spektrometers mit einer Diodenzeile als Empfänger auf Bruchteile von 25 µm konstant bleiben. Aber auch für viele andere Geräte würde eine bessere zeitliche und thermische Stabilität Vorteile bringen.

Es ist daher die Aufgabe der vorliegenden Erfindung, ein Chassis für optische Geräte anzugeben, daß sich durch besonders gute und dauerhafte Stabilität, geringe thermische Beeinflußbarkeit und preiswerte Herstellung auszeichnet.

Die gestellte Aufgabe wird gemäß der Erfindung dadurch gelöst, daß zum Erzielen einer guten Festigkeit und einer dauerhaft genauen Halterung der optischen Bauteile mindestens die dafür wesentlichen Teile des Chassis aus verdichteter Keramik bestehen. Hierunter ist eine Keramik zu verstehen, die durch Pressen vor oder während des Brennens verdichtet wird.

In einer vorteilhaften Ausführungsform ist der Ausdehnungskoeffizient der Keramik gleich dem von optischem Glas gewählt, wodurch das Auftreten von mechanischen Spannungen und den dadurch bedingten Veränderungen vermieden wird. Besonders vorteilhaft ist eine Ausbildung des Chassis als 3-dimensionales, verwindungssteifes Hohlgerüst.

Das Chassis nach der Erfindung kann aus mehreren Teilen zusammengesetzt sein. Dabei können die Einzelstücke zusammengesintert ("angarniert") oder lösbar miteinander verbunden sein, z.B. durch Schraubverbindungen mit Zuganker.

Zur Befestigung der optischen Bauteile können in dem Keramikchassis Gewindebahrungen vorgesehen sein. Besonders vorteilhaft ist es, für die Befestigung von optischen Bauteilen im Keramikchassis Hohlräume vorzusehen, in welche Fassungsteile der optischen Bauelemente hineinreichen und dort durch eine pastenförmige oder flüssige Substanz, die sich mit geringer Volumenänderung verfestigt, verankert werden. Dies ist in unserer am gleichen Tage eingereichten Anmeldung (EP-A1-0 090 218) "Verfahren und Vorrichtung zum Justieren und Montieren von Bauteilen in optischen Geräten" beschrieben. Eine andere, ebenfalls in der zitierten Anmeldung beschriebene, sehr vorteilhafte Möglichkeit besteht darin, zwischen dem optischen Bauteil oder seiner Fassung und dem Gehäusechassis Nuten vorzusehen, welche zur Fixierung der optischen Bauteile mit der sich verfestigenden Substanz ausgefüllt werden. Auch das ebenfalls in derzitierten Anmeldung beschriebene Verfahren, optische Bauteile oder deren Fassungen, die eine annähernd plane Oberfläche haben, mit einer annähernd parallelen Oberfläche des Gehäusechassis durch die sich verfestigende Substanz zu verbinden, kann bei einem Keramikchassis mit Vorteil angewendet werden.

In einer weiteren Ausgestaltung der Erfindung kann die Oberfläche des Keramikchassis oder Teile derselben durch eine Glasur elektrisch leitend gemacht werden und damit eine Abschirmung bewirken. Sehr vorteilhaft ist es auch, durch gezielte Porosität und/oder eine Mattglasur Teilen des Keramikchassis eine optisch stark absorbierende Oberfläche zu geben, wodurch störende Reflexe vermieden und/oder das sog. Falschlicht stark herabgesetzt werden kann, ohne daß eine Gasabgabe wie bei den sonst im optischen Gerätebau üblichen mattschwarzen Lacken auftritt.

Durch die verdichtete Keramik wird im Gegensatz zur normalen Keramik eine sehr gute Festigkeit erreicht. Bekannt ist die Anwendung von verdichteter Keramik z. B. für Isolatoren und Prothesenteile. Wenn das Chassis bzw. Chassisteil einen gleichbleibenden Querschnitt hat, kann es im sog. Strangpressverfahren hergestellt werden. Bei komplizierteren Formen kommt das sog. Trockenpressen in Frage. Das Material kann im ungebrannten Zustand leicht bearbeitet werden; es erhält seine Festigkeit erst durch das Brennen.

Die durch die Erfindung erzielten Vorteile bestehen außer in der guten und dauerhaften Stabilität, der geringen thermischen Beeinflußbarkeit und dem geringen Preis durch geringe Materialkosten und einfache Bearbeitbarkeit auch in der guten Korosionsbeständigkeit, in der guten Isolationsfähigkeit und im geringen Gewicht. Ein wesentlicher Vorteil ist ferner, daß die Keramik nicht gast, praktisch keine Alterungserscheinungen zeigt und daß der thermische Ausdehnungskoeffizient genau auf denjenigen von Glas abgestimmt werden kann, so daß mischen dem Chassis und den optischen Bauteilen keine mechanischen Spannungen bei Schwankungen der Umgebungstemperaturen hervorgerufen werden.

Die Erfindung wird im folgenden anhand von zwei Ausführungsbeispielen mit Figuren näher erläutert. Bei den Figuren zeigen:

Fig. 1a und b ein Keramikchassis für ein Spektrometer,

Fig. 2a und b ein Keramikchassis für eine Beleuchtungseinrichtung und Fig. 3 ein Keramikchassis für ein Prismenfernrohr.

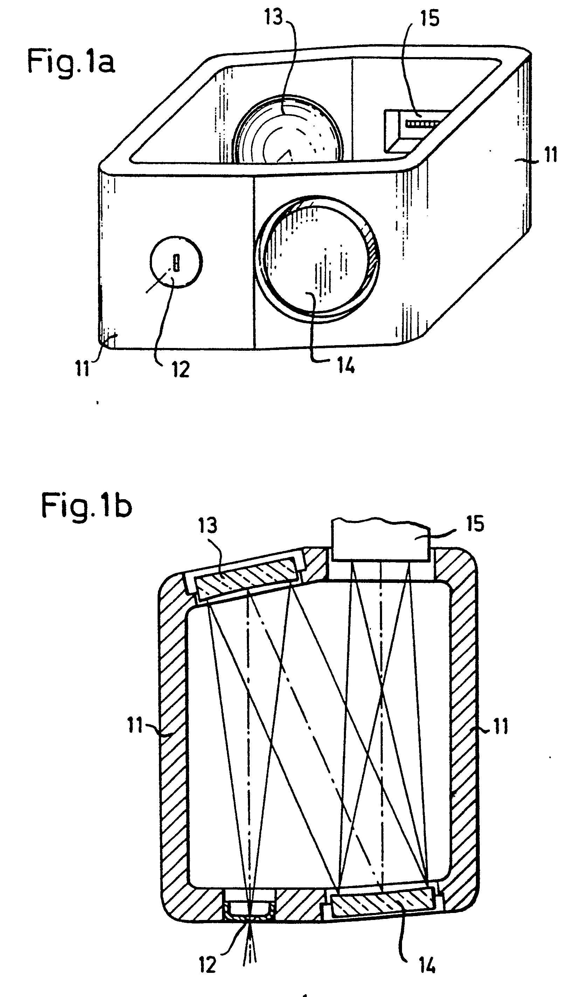

In Fig. 1 ist ein mit 11 bezeichnetes Keramikchassis für ein Spektrometer perspektivisch dargestellt; Fig. 1b zeigt einen Schnitt durch das Keramikchassis in der optischen Ebene. Als optische Bauelemente enthält das Spektrometer den Eintrittsspalt 12, einen Hohlspiegel 13, ein Gitter 14 und eine Diodenzeile 15 als Empfänger. Das Keramikchassis 11 kann durch Strangpressen hergestellt werden. Die Herstellung durch Trockenpressen ergibt eine größere Genauigkeit. Der Eintrittsspalt 12 besteht aus einem Ausschnitt in einem Blechteil, das z. B. direkt in das Keramikchassis 11 eingeklebt werden kann. Die Befestigung der übrigen optischen Bauteile kann z. B. mit einer niedrigschmelzenden Legierungerfolgen, wie dies in de oben angegebenen Ameldung beschrieben ist. Diese Art der Befestigung ist besonders vorteilhaft. Die optischen Bauteile können ober selbstverständlich auch in konventioneller Art befestigt und justiert werden.

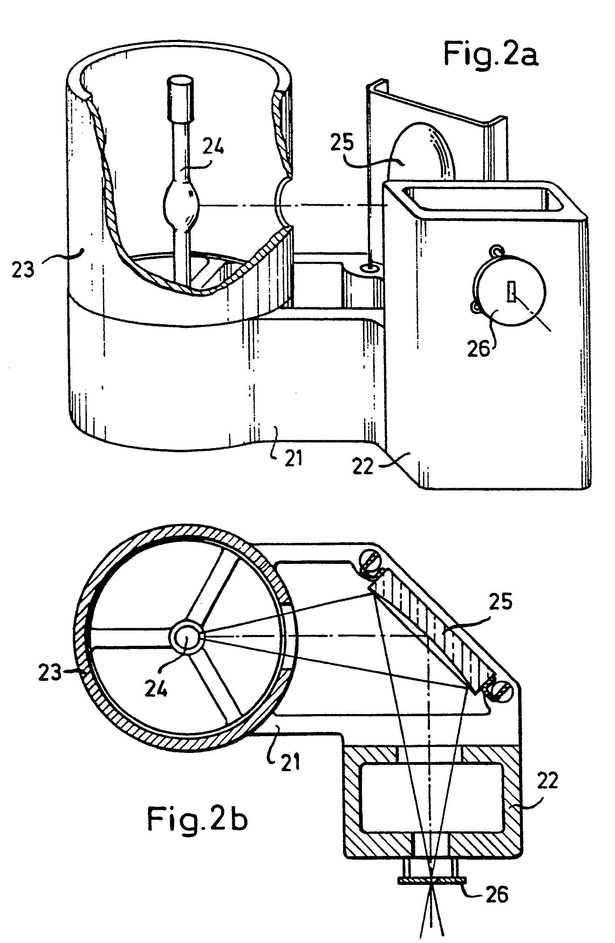

Fig. 2a zeigt in perspektivischer Darstellung eine Beleuchtungseinrichtung, wie sie z. B. für das in den Figuren 1a und b dargestelltem Spektrometer verwendet wird. Das Chassis besteht aus den Keramikteilen 21 und 22, die entweder zusammengesintert ("angarniert") oder durch mechanische Verbindungen zusammengehalten sind. Der die im Teil 21 befestigten Xenonlampe 24 umgebende Zylinder 23 kann ebenfalls aus Keramik, aber auch aus einem anderen Werkstoff sein. Der elliptische Hohlspiegel 25 und die austrittsblende 26 sind am Teil 21 bzw. 22 wieder so befestigt, wie das in der oben angeführten Anmeldung näher beschrieben ist. Auch hier wäre eine konventionelle Befestigung grundsätzlich möglich. Fig. 2b zeigt einen Schnitt in der optischen Ebene. Das Keramikteil 21 wird zweckmäßigerweise durch Trockenpressen, das Keramikteil durch Strangpressen hergestellt.

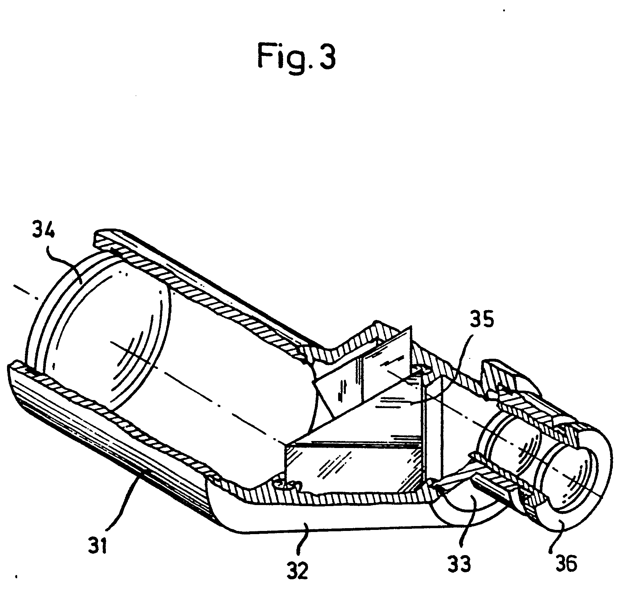

In Fig. 3 ist als Beispiel für die Ausgestaltung der Erfindung für andere optische Geräte die eine Hälfte eines Prismenfernrohres perspektivisch dargestellt. Die optischen Elemente, nämlich Objektiv 34, Porro-Prisma 35 und Okular 36 sitzen in einem Keramikchassis, das aus den Teilen 31, 32 und 33 besteht. Das Teil 31 kann stranggepreßt sein, das Teil 32 ist trockengepreßt. Beide Teile werden zweckmäßigerweise zusammengesintert. Das Teil 33 wird erst eingesetzt, wenn das Porro-Prisma eingesetzt und justiert ist. Das Teil 33 kann auch z. B. aus Metall oder Kunststoff sein und hat ein nicht gezeichnetes Gewinde zur Fokussierung des Okulars 36. Es ist besonders vorteilhaft, mindestens das Objektiv 34 und das Porro-Prisma 35 so zu justieren und zu befestigen wie es in der oben angeführten Anmeldung beschrieben ist. Es ist jedoch auch möglich, eine konventionelle Befestigung zu verwenden.

Zweckmäßigerweise wird das Keramikchassis mit einem nicht gezeichneten Überzug versehen, der dem Prismenfernrohr eine gefällige und praktische Oberfläche gibt.

**Patentansprüche**

1. Optisches Gerät mit einem Chassis aus Keramik, an dem mehrere optische Bauteile in zueinander ausgerichteter Position befestigt sind, dadurch gekennzeichnet, daß zum Erzielen einer guten Festigkeit und einer dauerhaft genauen Halterung der optischen Bauteile mindestens die dafür wesentlichen Teile des Chassis aus verdichteter Keramik bestehen.

2. Optisches Gerät nach Anspruch 1, dadurch gekennzeichnet, daß der thermische Ausdehnungskoeffizient der verdichteten Keramik gleich dem von optischem Glas gewählt ist.

3. Optisches Gerät nach Anspruch 1 oder 2, dadurch gekennzeichnet, daß das Chassis als 3-dimensionales verwindungssteifes Hohlgerüst ausgebildet ist.

4. Optisches Gerät nach einem der Ansprüche 1 bis 3, dadurch gekennzeichnet, daß das Chassis aus mehreren Einzelteilen, die zusammengesintert sind, unlösbar zusammengesetzt ist.

5. Optisches Gerät nach einem der Ansprüche 1 bis 3, dadurch gekennzeichnet, daß das Chassis aus mehreren Einzelteilen, die lösbar miteinander verbunden sind, zusammengesetzt ist.

6. Optisches Gerät nach einem der Ansprüche 1 bis 5, dadurch gekennzeichnet, daß für die Befestigung der optischen Bauteile in der Keramik Gewindebohrungen vorgesehen sind.

7. Optisches Gerät nach einem der Ansprüche 1 bis 5, dadurch gekennzeichnet, daß für die Befestigung der optischen Bauteile in der Keramik Hohlräume vorgesehen sind.

8. Optisches Gerät nach einem der Ansprüche 1 bis 5, dadurch gekennzeichnet, daß für die Befestigung der optischen Bauteile in der Keramik Nuten vorgesehen sind.

9. Optisches Gerät nach einem der Ansprüche 1 bis 8, dadurch gekennzeichnet, daß die Oberfläche der Keramik oder Teile derselben durch eine Glasur elektrisch leitend gemacht sind.

10. Optisches Gerät nach einem der Ansprüche 1 bis 9, dadurch gekennzeichnet, daß die Oberfläche der Keramik oder Teile derselben durch gezielte Porosität und/oder Mattglasur optisch stark absorbierend gemacht sind.

## Claims

1. Optical instrument with a chassis of ceramic, on which several optical components are attached in a position adjusted to one another, characterized by the fact that for obtaining a good strength and a permanent precise holding of the optical components at least the parts of the chassis essential for this purpose exist of compacted ceramic.

2. Optical instrument according to Claim 1, characterized by the fact that the coefficient of thermal expansion of the compacted ceramic is equal to that of optical glass.

3. Optical instrument according to Claim 1 or 2, characterized by the fact that the chassis is developed as a three-dimensional torsionally-resistant hollow structure.

4. Optical instrument according to any of Claims 1 to 3, characterized by the fact that the frame is assembled in indissoluble manner from a plurality of individual parts which are sintered together.

5. Optical instrument according to any of Claims 1 to 3, characterized by the fact that the frame is composed of a plurality of individual parts which are detachably connected to each other.

6. Optical instrument according to any of Claims 1 to 5, characterized by the fact that threaded holes are provided for fastening the optical components in the ceramic.

7. Optical instrument according to any of Claims 1 to 5, characterized by the fact that hollow spaces are provided for fastening the optical components in the ceramic.

8. Optical instrument according to any of Claims 1 to 5, characterized by the fact that grooves are provided for fastening the optical components in the ceramic.

9. Optical instrument according to any of Claims 1 to 8, characterized by the fact that the surface or parts thereof are made electrically conductive by a glaze.

10. Optical instrument according to any of Claims 1 to 9, characterized by the fact that the surface or parts thereof are imparted strong optical absorption by intentional porosity and/or a dull glaze.

## Revendications

1. Appareil optique comportant un châssis en céramique, sur lequel sont fixés plusieurs composants optiques dans des positions mutuellement alignées, caractérisé en ce que, pour obtenir une bonne résistance et un maintien précis et durable des composants optiques, au moins les parties, esentielles à cet égard, du châssis sont constituées de céramique compactée.

2. Appareil optique selon la revendication 1, caractérisé en ce que le coefficient de dilatation thermique de la céramique compactée est choisi égal à celui d'un verre optique.

3. Appareil optique selon la revendication 1 ou 2, caractérisé en ce que le châssis est agencé sous forme d'une ossature creuse tridimensionnelle et rigide à la torsion.

4. Appareil optique selon une des revendications 1 à 3, caractérisé en ce que le châssis est composé de plusieurs parties individuelles qui sont inséparables et liées ensemble par frittage.

5. Appareil optique selon une des revendications 1 à 3, caractérisé en ce que le châssis est composé de plusieurs parties individuelles qui sont reliées ensemble de façon séparable.

6. Appareil optique selon une des revendications 1 à 5, caractérisé en ce que, pour la fixation des composants optiques, il est prévu dans la céramique des trous filetés.

7. Appareil optique selon une des revendications 1 à 5, caractérisé en ce que, pour la fixation des composants optiques, il est prévu dans la céramique des cavités.

8. Appareil optique selon une des revendications 1 à 5, caractérisé en ce que, pour la fixation des composants optiques, il est prévu dans la céramique des rainures.

9. Appareil optique selon une des revendications 1 à 8, caractérisé en ce que la surface de la céramique ou de parties de celle-ci est rendue électriquement conductrice par un glaçage.

10. Appareil optique selon une des revendications 1 à 9, caractérisé en ce que la surface de la céramique ou de parties de celle-ci est rendue optiquement fortement absorbante par une porosité appropriée et/ou un glaçage mat.

**Fig.1a**

**Fig.1b**

1

Fig.2a

Fig.2b

# Fig. 3

34

35

31

32

33

36